Europäisches Patentamt

European Patent Office

Office européen des brevets

(19)

(11) Publication number: **0 382 236**

**A2**

# EUROPEAN PATENT APPLICATION

(12)

(21) Application number: 90102570.0

(22) Date of filing: 09.02.90

(51) Int. Cl.5: **B32B 27/34, B32B 27/40**

(30) Priority: 10.02.89 US 309281

(43) Date of publication of application:
16.08.90 Bulletin 90/33

(84) Designated Contracting States:
AT BE CH DE DK ES FR GB GR IT LI LU NL SE

(71) Applicant: THE B.F. GOODRICH COMPANY
3925 Embassy Parkway
Akron Ohio 44313-1799(US)

(72) Inventor: Hall, Dale Ritchey
135 Glenview Drive
Avon Lake, Ohio 44012(US)

(74) Representative: von Kreisler, Alek,
Dipl.-Chem. et al
Patentanwälte Von Kreisler-Selting-Werner
Deichmannhaus am Hauptbahnhof
D-5000 Köln 1(DE)

(54) Polyamide laminate on thermoplastic polyurethane.

(57) A self-adhering laminate of a polyamide multipolymer on thermoplastic polyurethane is prepared by disrupting the crystalline structure of the polyamide sufficiently through polymerization of at least 3 polyamide precursors such that a melting point in range of 140°C to 190°C is obtained. The laminate provides better resistance to solvents on the polyamide side than on the uncoated polyurethane. The bonding of the polyamide onto the polyurethane is achieved without the use of surface modifications, such as solvents, softening agents or adhesives.

EP 0 382 236 A2

## POLYAMIDE LAMINATE ON THERMOPLASTIC POLYURETHANE

This invention relates to making self-adhering laminates of polyamides on thermoplastic polyurethane to combine desirable properties of the former with those of the latter.

### Background of the Invention

Thermoplastic polyurethane (TPU) is well known and widely used in industry. It is prepared by the addition polymerization of an isocyanate, such as tolylene isocyanate (TDI) or diphenylmethane diisocyanate (MDI), with a polyol, such as a polyester or a polyether. Thermoplastic polyurethanes are known to exhibit exemplary abrasion resistance and toughness, but they also have a low resistance to aromatic fuels and solvents.

Polyamides, also generally known as nylons, are the condensation polymers of a diamine and a dibasic acid, resulting in so-called "AABB" polymers, or of amino acids, resulting in so-called "AB" polymers. They can also result from addition polymerization of cyclic lactams, such as caprolactam or 2-pyrrolidinone, also forming "AB" polymers. The commercial introduction of nylon 6,6 by duPont in the late 1930's and its subsequent market success is well known.

The nomenclature of nylons involves using numbers to signify the number of carbon atoms in the monomers used. In AABB polymers, two numbers are used, the first representing the number of carbon atoms in the diamine and the second representing the number of straight-chain carbon atoms in the dibasic acid. For example, nylon 6,6 is made from hexamethylene diamine and adipic acid, nylon 6,10 is from hexamethylene diamine and sebacic acid, etc. In a similar system, the AB polymers are identified using only a single number, which represents the number of carbon atoms. For example, poly(caprolactam) is also known as nylon 6 and poly (omega-amino undecanoic acid) is known as nylon 11. In the case of ring structures, the common method of nomenclature is to use letters; for example, the ringed diamine piperazine is designated "Pip" and the ringed dibasic acid terephthalic acid is designated "T". Some very typical nylon intermediates and their designations are found in Table 1 in the Kirk-Othmer Encyclopedia of Chemical Technology, 3rd Ed., Vol. 18 (referred to hereinafter as "Kirk-Othmer"), 1982, at page 330.

The nylons, because of their symmetrical nature and the availability of hydrogen bonding, exhibit crystalline properties. These crystalline properties are commonly exploited in the nylons, and include toughness, stiffness, hardness and resistance to aromatic fuels and solvents.

The crystalline nature of polyamides has made the direct bonding of polyamides to TPU and other similar materials quite difficult to achieve.

United States Patent No. 3,489,631 to Chen discloses a method for securely bonding polyurethane to nylon, but Chen uses a solvent for softening the nylon, such as resorcinol, and the polyurethane, such as vinyl pyrrolidone.

Similarly, United States Patent No. 3,300,370 to Epstein discloses a method for securely bonding polyurethane to nylon, but Epstein also uses solvent-softening agents for both layers of the laminate. Epstein uses mixtures of compounds such as cresol and tetrahydrofuran to act as softening agents.

Another known method of incorporating nylon properties into a TPU is to encapsulate an open-weave nylon with the TPU. This method does not result in a secure bond, however, as can be readily demonstrated by sectioning such a material. This method also has the disadvantage of containing the nylon layer, thereby precluding or hindering the exploitation of some of its desirable properties, such as resistance to certain solvents.

### Summary of the Invention

It is, therefore, an object of this invention to provide a process for securely bonding a layer of polyamide to a layer of thermoplastic polyurethane without the use of solvents, softening agents or adhesives.

It is also an object of this invention to provide a process for securely bonding a layer of polyamide to a layer of TPU without encapsulating the gross structure of the polyamide within the TPU, where its solvent resistance properties are not effectively utilized.

It is also an object of this invention to provide a laminated material having a polyamide layer and a TPU layer such that the polyamide side has a permeability to styrene and other like solvents that is substantially lower than the permeability of TPU.

The products of the invention are laminates comprising a thermoplastic polyurethane directly bonded to a polyamide multipolymer or polyamide mixture having a disrupted crystal structure and a melting point of 140° to 190° C, without surface modifications of either polymer.

These products are prepared by bringing together unmodified surfaces of a TPU and a polyamide multipolymer or a polyamide mixture having a melting point between 140° and 190° C at a pressure sufficient to cause bonding and in the absence of a surface modification agent.

## Description of the Preferred Embodiment

The crystallinity and the melting point of a polyamide are related to the strong polar forces between amide linkages. Disruption of the crystallinity and a lowered melting point can be achieved by several methods. If the chain length in the polymer is not regular, melting point decreases. For example, nylon 6,6 melts at 255°C, nylon 6 at 218°C and nylon 6,12 at 212°C. It is also known that alpha-lateral substituents will lower the melting point, as shown in Kirk-Othmer, cited supra, Table 4, on page 344. Similarly, alpha-lateral substituents on the nitrogen atom of the amide linkage introduce lateral disorder and remove hydrogen bonding, as shown in Kirk-Othmer, supra, at page 345. The use of alpha-lateral substituents in the polyamide has a very marked detrimental effect on the polyamide's solvent resistance, however. Multipolymerization that decreases the regularity of the backbone chain also lowers melting temperature, as shown in Kirk-Othmer, supra, at 348.

Crystalline polyamides admittedly will show the best resistance to aromatic solvents, such as styrene. Even in a disrupted crystalline state, polyamides will still exhibit better resistance than TPU. In addition to multipolymerization, crystallinity can be disrupted by heating a mixture of different polyamides above their respective melting points and then cooling them, forming a polyamide mixture. Whereas crystalline polyamides are difficult to bond to TPU and other polymers, polyamides in a disrupted crystalline state, as indicated by a reduced melting point, i.e., in the range of 140° C to 190° C, can be tenaciously bonded to TPU to form polyamide-TPU laminate materials

The thermoplastic polyurethane (TPU) preferred for this invention should be prepared by the method disclosed in U.S. Patent 2,871,718 to Schollenberger. Although the preferred reactants are 1,4-butanediol, poly (tetramethylene adipate glycol) with a molecular weight in the range of 1000 to 1100 , and diphenylmethane diisocyanate (MDI), one of ordinary skill in the art will readily know that other materials are efficacious in preparing the TPU. The resulting TPU may be granulated and aged for at least72 hours at 60 C. The preferred TPU will exhibit the following physical properties: a specific gravity of about 1.25, according to ASTM D-792; a durometer hardness of A/95, D/48, according to ASTM D-2240-68; an ultimate tensile strength of about 8550 psi, according to D-412-68; a modulus at 300% elongation of about 4900 psi, also according to ASTM D-412-68; an ultimate elongation of about 410%, also according to ASTM D-412-68; a Graves tear of about 600 lbs/inch, according to ASTM D-624; and a low temperature brittleness point of about -81° F, according to ASTM D-746.

## Example 1

"Elvamide" 8061, formerly "Zytel" 63, a product of duPont, is believed to be a nylon 6/6,6/6,10 terpolymer. "Elvamide" 8061 has a melting point in the range of 145° C to 160° C, as disclosed by duPont physical property data. An layer of "Elvamide" 8061 that varied from an unmeasurably thin layer up to 12 mil layer was coextruded with a 16 mil (0.4 mm) layer of the preferred TPU disclosed above. The coextrusion was done by drying granular TPU and granular "Elvamide" 8061 for two hours at 105° C prior to a multi-layer co-extrusion via two laboratory Killion extruders feeding a Killion multi-layer combining adapter and six-inch wide sheet die. The TPU was fed from a one-inch diameter extruder, and the "Elvamide" 8061 was fed from a one-and-one-quarter inch extruder. The length to diameter ratio of each extruder was 24:1, and each was equipped with a 3:1 compression screw. The zone temperatures for the polyamide extruder were as follows: rear temperature, 315° F; middle temperature, 333° F; front temperature, 333° F; adapter temperature, 344° F; combining adapter temperature, 356° F; film die temperature, 344° F; and melt temperature, 360° F. The zone pressures in the polyamide extruder were: rear pressure, 151 psi; and melt pressure, 1051 psi. The screw RPMs were varied to vary the thickness of the polyamide layer. The zone temperatures for the TPU extruder were: rear temperature, 325° F; middle temperature, 335° F; front temperature, 335° F; adapter temperature, 334° F; combining adapter temperature, 356° F; film die temperature, 344° F; and melt temperature of 349° F. The melt pressure in the TPU extruder was 1348 psi and the screw turned at 16 rpm. The bi-layer extrudate was cooled on a water-cooled, six-inch diameter, chrome-plated, three-roll stack and rolled for storage.

## Example 2

A sample of the TPU used in Example 1 was tested according to ASTM D814 to determine styrene permeability. Briefly, the test sample was exposed on one face surface to liquid styrene at ambient temperature for a period of twenty-eight days. The steady state permeability was measured at 500 g-mm/m$^2$-24 hr, or in alternate terms, 1300 g-mil/100 in$^2$-24 hr. or 20,000 g-mil,/m$^2$-24 hr.

## Example 3

The laminate of 3 mils of "Elvamide" 8061 coextruded onto 16 mils of TPU as prepared in Example 1 above, when tested according to ASTM D814, showed no permeation whatsoever after 300 hours of exposure to styrene.

## Example 4

When an unmeasurably thin layer of "Elvamide" 8061 was coextruded onto the TPU according to the procedure in Example 1 and tested according to ASTM D814, styrene permeability in the range of 50 g-mm,/m$^2$-24 hr. was observed, albeit with some swelling of the TPU side of the laminate.

## Example 5

To determine tenacity of the adhesion of the bond between the "Elvamide" 8061 (melting point about 150°C) to the preferred TPU in the laminate prepared according to Example 1, a one-inch wide by eight-inch long strip of the laminate was die cut and subjected to a peel test on a Tensometer 10 tensile testing machine using pneumatic grips and a 200-pound load cell. The first inch of length of each end of the strip was manually separated and placed over the grips of the Tensometer. The ends were then pulled apart over the remaining six inches of the strip at a rate of 20 inches per minute, while measuring the resultant force in pounds per lineal inch. The average force was recorded. The laminate did not separate, even under a force of 20 pounds per lineal inch.

## Example 6

For comparison purposes, a layer of nylon 6 with a melting point of about 215°C was coextruded onto the preferred TPU in the same manner disclosed in Example 1 and the tenacity of adhesion tested in identical manner with that disclosed in Example 5. The laminate separated under a force of less than 1 pound per lineal inch.

## Example 7

For similar comparison purposes, a layer of nylon 6/6,6 copolymer with a melting point about 200°C was coextruded onto the preferred TPU in the same manner disclosed in Example 1 and tested for tenacity of adhesion in an identical manner with that disclosed in Example 5. A force of less than 1 pound per lineal inch was required to separate the layers.

## Example 8

A terpolymer of nylon 6/6,6/6,10/6,12, with a melting point of 105°C was coextruded onto the preferred TPU in the same manner disclosed in Example 1 and tested for tenacity of adhesion in an identical manner with that disclosed in Example 5. Under a force of 20 pounds per lineal inch, the layers of the laminate did not separate.

## Example 9

A polyamide multipolymer containing at least three polyamide precursors is produced, such that the melting point of the resultant polyamide is in the range of 140 to 190°C. This polyamide multipolymer exhibits a permeability to styrene that is lower than that exhibited by a crystalline homopolymer of any of the copolymers used in producing it. The polyamide is coextruded with the preferred or another TPU at conditions identical to those disclosed in Example 1, so that a layer of polyamide thicker than 1 mil is laminated onto the TPU.

When the styrene permeability of the polyamide side of the laminate material so produced is tested according to ASTM D814, the permeability is determined to be considerably less than the 500 g-mm/m$^2$-24 hr determined for the preferred TPU.

When the tenacity of adhesion of the laminate material produced by coextrusion is measured by the same 180° peel test disclosed in Example 5, a force greater than 20 pounds per lineal inch is required to separate the layers of the laminate.

While in accordance with the patent statutes, a preferred embodiment and best mode of the invention have been presented, the scope of the invention is not limited thereto, but rather is measured by the scope of the attached claims.

## Claims

1. A laminate material for providing the advantageous features of thermoplastic polyurethane and polyamides on opposite surfaces, comprising: a layer of thermoplastic polyurethane integrally bonded onto a layer of a polyamide multipolymer, said polyamide multipolymer containing at least three polyamide precursors such that the crystalline structure of the multipolymer is disrupted and the melting point of the multipolymer is in the range of 140 - 190°C.

2. A laminate material according to Claim 1, wherein the polyamide precursors for the polyamide multipolymer are chosen from the precursors for nylon 6, nylon 6,6, nylon 6,10, nylon 6,12, and nylon 12.

3. A laminate material according to Claim 1, wherein said polyamide multipolymer and said termoplastic polyurethane have unmodified surfaces and are joined together under sufficient pressure to cause integral bonding.

4. A process for forming a laminate material comprising a layer of thermoplastic polyurethane integrally bonded onto a layer of a polyamide multi-polymer which comprises joining together a layer of a thermoplastic polyurethane and a layer of a polyamide multipolymer having a melting point in the range of 140°C to 190°C at a temperature above the melting point of either polymer and a pressure sufficient to cause integral bonding, the surface of said thermoplastic polyurethane and said polyamide multipolymer being unmodified.